# EUROPEAN PATENT SPECIFICATION

(11) **EP 1 583 041 B1**
(45) Date of publication and mention of the grant of the patent: **06.09.2006**
(21) Application number: 04425226.0
(22) Date of filing: 30.03.2004
(51) Int. Cl.: G07C 9/00, B60R 25/00, B60R 25/04, E05B 65/36

(54) **Multi-user vehicle utilization system and electronic key therefor**
Mehrbenutzer-System für Kraftfahrzeug und elektronischer Schlüssel für desgleichen
Système multi-utilisateur de véhicule et cléf pour cela.

(43) Date of publication of application: 05.10.2005
(73) Proprietor: C.R.F. Società Consortile per Azioni, 10043 Orbassano (TO) (IT)
(72) Inventor: Burzio, Gianfranco c/o C.R.F. Società Consortile, 10043 Orbassano (IT)
(74) Representative: Jorio, Paolo

(56) References cited:
- EP-A- 1 128 335
- DE-A- 19 753 401
- US-A1- 2004 041 691
- US-A1- 2004 051 631

## Description

The present invention relates to a multiuser vehicle utilization system, and to an electronic key therefor.

Most vehicles currently feature conventional mechanical keys for access to the vehicle (unlocking and locking the doors) and turning on the engine, and which are normally associated with a door lock/release remote control.

Recently, more advanced vehicle utilization systems, based on radio-frequency identification devices, have been proposed for use either in conjunction with or instead of conventional mechanical key systems.

More specifically, such systems comprise a radio-frequency transmitter for transmitting an identification code, and an on-vehicle receiving unit which compares the incoming identification code with a code memorized on the vehicle. In the event of a match, i.e. positive identification, the system releases the vehicle doors, and may also enable other vehicle functions, such as starting the engine, which may be done, for example, by pressing a button or turning an ignition knob.

The identification code may be memorized in an electronic medium which may be combined with the radio-frequency transmitter to form an electronic key; and the electronic key may, for example, be in compact form, similar to a credit card, to be carried easily by the user.

In the case of vehicle fleets, such as company cars, hire cars and similar, the same vehicle may be used by various users, each with a respective key.

In this case, a table is memorized on the vehicle containing a number of identification codes, each for enabling a respective electronic key to permit use of the vehicle.

Other data, besides the user identification code, is also known to be memorized in the electronic key.

For example, data relative to different authorization levels governing use of a given vehicle is known to be memorized, so that the vehicle is only enabled, for example, for use during certain hours of the day, or for a limited mileage, or a limited number of days.

Another recent proposal is to memorized personal data in an electronic key, such as driver's seat, rearview mirror, car radio, or air conditioning settings, so that, by reading the personal data, the vehicle settings can be adjusted automatically in one operation.

All the above utilization systems are characterized by each key being assigned one identification code.

Consequently, the holder of an electronic key is only allowed access to a vehicle if the identification code of the electronic key is included in the code table memorized on the vehicle. Conversely, to enable use of the vehicle, the user must be supplied with another electronic key whose identification code is memorized in the on-vehicle code table.

Consequently, though in possession of a personal electronic key containing personal data relative to on-vehicle device preferences or settings, the user is unable to take advantage of them by having to use another key.

DE 197 53 401 A discloses a car having an electronic lock, especially an ignition lock, and an associated electronic key. The key exchanges at least one coded operation signal with the lock so that after positive evaluation of the transmitted signal, the clearance of the car for travel operation can be released. With the attainment of a limiting value concerning the travel operation, the clearance of the car can be blocked. A preferably coded clearance signal can be transmitted to the car and/or key from an external central station spatially separated from the car. By the clearance signal, a change of the limiting value can be released. The key can be reprogrammed to be used with a plurality of vehicles belonging to a car fleet. However, each time a new vehicle is to be used, the electronic key must be programmed with an appropriate coded signal.

EP-A-1 128 335 discloses an access control device comprising at least one key unit regularly carried by a user, a lock system for access to a mobile vehicle using the key unit and a monitoring center that communicates with the lock system for access authorization thereof.

US 2004/051631 A1 discloses a security system for a vehicle using coded keys provided with encrypted codes generated by appropriate encryption algorithms, that are transmitted to an immobilizer or car alarm, for authentication thereof.

US 2004/041691 A1 discloses a system and a method for limiting at least one operational characteristic, such as maximum speed of a vehicle. A vehicle limitation control signal is supplied to the vehicle over a wireless communication network, e.g. via a personal digital assistant (PDA).

A demand is therefore felt for a vehicle utilization system designed to eliminate the drawbacks of known systems.

According to the present invention, a vehicle utilization system and a key therefor are provided, as claimed in claims 1 and 16, respectively.

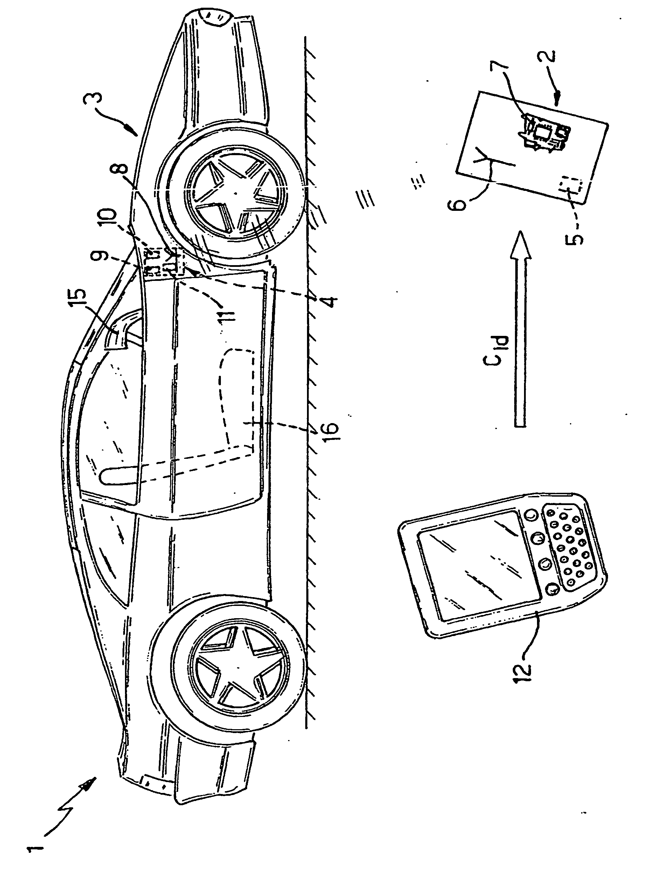

A preferred, non-limiting embodiment of the present invention will be described by way of example with reference to the accompanying drawing illustrating, schematically, a vehicle utilization system in accordance with the present invention.

As shown in the accompanying drawing, a utilization system 1, in accordance with one embodiment of the present invention, comprises a portable electronic key 2 carried by a user wishing to use a vehicle 3; an enabling device 4 on vehicle 3; and a computer 12, e.g. a personal computer (desktop or laptop) or a PDA (Personal Digital Assistant). More specifically, computer 12 may preferably be in the form of a PDA already owned by the user.

Electronic key 2 comprises an electronic microprocessor circuit 7 associated with at least one memory 5 and with a known radio-frequency transmitter 6, which cooperate with electronic circuit 7.

According to one aspect of the present invention, memory 5 stores one or more enabling codes C_{id} (as explained in detail later on), and personal data Dₚₑᵣₛ relative to adjustable on-vehicle device settings, such as an automatic rearview mirror 15, an automatic driver's seat 16, an air conditioning system, car radio, and satellite navigation system (not shown in the drawing). The personal data Dₚₑᵣₛ may also comprise the directory of an on-vehicle cellular telephone (not shown) or music in compressed digital format (e.g. MP3).

Personal data Dₚₑᵣₛ relating, for example, to adjustment of the driver's seat or rearview mirrors may conveniently be indirect data, in the sense of relating to physical parameters of the user (such as height, arm length, etc.), so that the actual parameters by which to set adjustable devices on different vehicle models can be determined on the basis of the indirect data memorized in electronic key 2.

In one possible embodiment, electronic key 2 is in the form of a credit card, and is inserted in an electronic card reader (not shown) of computer 12.

In an alternative embodiment (not shown), electronic key 2 is in the form of a USB key, and is interfaced in known manner with computer 12.

On-vehicle enabling device 4 comprises an electronic circuit with at least a known receiver 8 for receiving the data transmitted by transmitter 6; a processing unit 9 for processing the incoming data; a comparator 10; and an actuator 11.

By means of dedicated software, computer 12 generates enabling codes C_{id}, and, when interfaced in known manner with electronic key 2, transfers them to memory 5 of electronic key 2, where the enabling codes C_{id} are stored.

The software may, for example, be developed by the maker of vehicle 3 and supplied to the user (e.g. in an optical medium) upon purchase of vehicle 3.

The basic idea of the present invention is that each vehicle 3 be assigned a single identification code Cᵥₑₕ, e.g. during manufacture or upon sale, and that the identification code Cᵥₑₕ be processed by computer 12 to generate an enabling code C_{id} which is memorized in the user's electronic key 2, is transmitted to on-vehicle enabling device 4, and is subsequently processed and recognized to enable use of vehicle 3 by the user by means of electronic key 2.

In actual use, electronic key 2 initially contains no enabling code C_{id} (though personal data Dₚₑᵣₛ may be assumed to be already memorized in known manner in memory 5). More specifically, personal data Dₚₑᵣₛ is assumed to be already memorized by computer 12 by means of specific application software (especially as regards, for example, the telephone directory, music, and similar).

To enable electronic key 2 to use vehicle 3, electronic key 2 is interfaced with computer 12 according to the characteristics of the key (USB or credit card type key).

The software of computer 12 then retrieves the single identification code Cᵥₑₕ of vehicle 3 (the code may already reside in the software, or may be entered manually, e.g. from the keyboard of computer 12, or may be received over a protected link to an internet data bank), and proceeds to generate an enabling code C_{id} by processing the input data. The enabling code C_{id} generated is then memorized in memory 5 of electronic key 2.

The above input data comprises the identification code Cᵥₑₕ of vehicle 3 and other information which may usefully be associated with the enabling code C_{id} generated by computer 12, such as a particular authorization level for use of vehicle 3.

For example, enabling code C_{id} may be associated with a limited time period or authorization for use of only some of the functions of vehicle 3. This is particularly useful in the case of car hire or company car fleets (for example, electronic key 2 may be enabled for only a particular time period or a given mileage, or an employee may be permitted use of the vehicle but not the on-vehicle entertainment facilities). Once the time period governing use of the vehicle or the set mileage runs out, the enabling code C_{id} is invalidated, and electronic key 2 is no longer enabled to use vehicle 3.

The software of computer 12 may advantageously employ a graphic menu system, by which the enabling code C_{id} can be memorized quickly and easily in electronic key 2 together with data relative to the authorization level for use of vehicle 3.

Whichever the case, the holder of electronic key 2 may be totally unaware of the enabling code C_{id} generating process, and, in particular, need not necessarily know the identification code Cᵥₑₕ of vehicle 3.

Generation of the enabling code C_{id} must of course be authorized by the owner of vehicle 3 or the management of the vehicle fleet, e.g. car hire firm, of which vehicle 3 forms part. Only when authorization is given, e.g. by means of a password system, can an enabling code C_{id} recognizable by vehicle 3 be memorized in electronic key 2.

For data transmission security reasons, enabling code C_{id} generated by computer 12 may advantageously be encrypted (in known manner), e.g. by means of a public key and a private key. Computer 12 in fact can generate a potentially unlimited number of encrypted enabling codes C_{id} from the same identification code Cᵥₑₕ of vehicle 3.

To prevent the transmitted code from being intercepted by radio receivers and used for subsequent access to vehicle 3, known strategies are used so that codes transmitted by radio differ at each use ("rolling code" technique).

To operate utilization system 1, the user of vehicle 3 first transmits the enabling code C_{id} in memory 5 by means of transmitter 6 of electronic key 2.

This may be done in either active or passive mode.

In active transmission mode, transmission is activated by the user, e.g. by pressing a key (not shown) on electronic key 2.

In passive transmission mode, transmission is activated as the holder of electronic key 2 approaches vehicle 3, e.g. by means of a known enabling system sensitive to electromagnetic fields.

Receiver 8 of on-vehicle enabling device 4 receives and sends the enabling code C_{id} to processing unit 9, which processes enabling code C_{id} and any associated data.

It should be pointed out that data can be transmitted by transmitter 6 to receiver 8 in any known manner, and in particular using any known data transmission protocol.

According to one aspect of the present invention, receiver 8 is conveniently designed to successfully receive data transmitted by transmitters 6 of various electronic keys 2, so that a single data transmission standard, common to various vehicle manufacturers, would be to advantage.

Given the above aspect of the invention, electronic key 2 is therefore universal by permitting use of any vehicle, after first programming an appropriate enabling code C_{id} obtained by processing the vehicle identification code Cᵥₑₕ.

If the enabling code C_{id} is already encrypted, processing unit 9 decrypts it to generate a decrypted code. More specifically, only processing unit 9 can decrypt the enabling code C_{id} transmitted by electronic key 2, e.g. by only the processing unit knowing the private key with which the enabling code was encrypted.

The decrypted code is then compared with the vehicle identification code Cᵥₑₕ by comparator 10, which generates a positive-value logic signal in the event of positive identification of the user.

The logic signal generated by the comparator commands actuator 11, which enables use of vehicle 3 by the user - in particular, enables the user to unlock the doors and turn on the engine - and adjusts the adjustable on-vehicle devices to the user's preference, which involves reading the personal data Dₚₑᵣₛ stored in memory 5 of electronic key 2.

Actuator 11 also enables use of the vehicle according to the authorization level associated with the enabling code C_{id} of electronic key 2, e.g. only for a given mileage or a given length of time.

At any time, the user may obviously alter the adjustable device settings made automatically on the basis of the data stored in electronic key 2.

For this reason, the vehicle may advantageously be equipped with memory means (not shown) connected operationally to electronic key 2 to memorize the latest settings in electronic key 2. The same memory means also memorize the personal data Dₚₑᵣₛ (or part of it) the first time the user uses electronic key 2.

The advantages of the present invention will be clear from the foregoing description.

In particular, the electronic key according to the invention is obviously fully independent of any particular vehicle or vehicle identification code, by being reprogrammable. Once programmed, in fact, the key permits use of a potentially unlimited number of vehicles, by simply memorizing in the electronic key a new enabling code obtained by processing the identification code of any vehicle.

The user can therefore use any vehicle by means of a single personal electronic key, complete at all times with personal preference and setting data.

At any given time, the same electronic key may also be enabled to use a number of vehicles, each with a different authorization level, which may be associated with the relative enabling code.

In short, the electronic key becomes personal, by relating to the user as opposed to a given vehicle, and universal, by permitting use of any vehicle by simply memorizing an appropriate enabling code in the electronic key.

The utilization system according to the invention also provides running vehicle fleets easily and efficiently.

Moreover, the user need not replace the personal key when purchasing a new vehicle or, for any reason, using a vehicle other than his/her own.

Vehicle access is also simplified in the event the personal key is lost. In which case, the user need simply report the vehicle data to an authorized dealer; on the basis of the vehicle data, the vehicle identification code can be traced by data bank access; and an enabling code obtained by processing the identification code can simply be memorized in a "virgin" electronic key.

Clearly, changes may be made to the system as described and illustrated herein without, however, departing from the scope of the present invention as defined in the accompanying Claims.

In particular, the electronic key according to the invention may obviously be of any form and structure other than those described.

Though the description is based entirely on wireless communication between the electronic key and on-vehicle enabling device, connecting means may be used to interface the electronic key with the on-vehicle enabling device (e.g. in the form of a connector for insertion of the electronic key). In which case, data is transmitted by electric contacts.

In this case, the on-vehicle connecting means may conveniently be universal, i.e. for interfacing any electronic key. And again, a single standard employed by different vehicle manufacturers may be advantageous.

## Claims

1. A vehicle utilization system permitting use of a vehicle (3) having a respective identification code (Cᵥₑₕ), the system comprising:
- a key (2) having memory means (5) configured to memorize an enabling code (C_{id}) enabling use of said vehicle; and
- enabling means (4) permitting use of said vehicle by a user in possession of said key (2), if the enabling code (C_{id}) memorized in the key meets given conditions; and
- programming means (12) for generating said enabling code (C_{id}) as a function of said identification code (Cᵥₑₕ) of the vehicle, and for memorizing said enabling code in said key (2) ; **characterised in that**
said memory means (5) are configured to memorize at least a further enabling code (C_{ic}) in addition to said enabling code; said further enabling code being associated with a different vehicle (3) usable by said user by means of said key (2) and generated by said programming means as a function of a respecting identification code of said different vehicle, and coexisting with said enabling code within said memory means.

2. A system as claimed in Claim 1, wherein said key (2) is a personal key of said user.

3. A system as claimed in any one of the foregoing Claims, wherein said key (2) is a universal key.

4. A system as claimed in any one of the foregoing Claims, wherein said enabling means (4) comprise reading means (8, 9) for reading the enabling code (C_{id}) memorized in said universal personal key (2).

5. A system as claimed in any one of the foregoing Claims, wherein said processing means (12) generate a number of different enabling codes (C_{id}) as a function of the same identification code (Cᵥₑₕ).

6. A system as claimed in any one of the foregoing Claims, wherein said vehicles (3) have respective adjustable devices (15, 16), and said memory means (5) memorize personal data (Dₚₑᵣₛ) relative to user personal information and to user personal settings of said adjustable devices of each vehicle; said personal data (Dₚₑᵣₛ) being associated to a respective enabling code being read by said enabling means (4) to activate adjustment of said adjustable devices (15, 16).

7. A system as claimed in Claim 6, wherein said adjustable devices (15, 16) comprise at least one of the following:
- an automatic driver's seat;
- an air conditioning system;
- an automatic rearview mirror;
- a car radio;
- a satellite navigation system;
- a cellular communication system.

8. A system as claimed in any one of the foregoing Claims, wherein said processing means have setting means (12) for setting an authorization level for use of said vehicle (3); said setting means associating with each of said enabling codes (C_{id}) additional data relative to the set authorization level; and said enabling means (4) permitting use of said vehicle by said user in accordance with said additional data.

9. A system as claimed in any one of the foregoing Claims, wherein said universal personal key (2) has data transmission means (6) for transmitting at least said enabling code (C_{id}) ; and said enabling means (4) comprise: data receiving means (8) for receiving the data transmitted by said data transmission means (6); computing means (9) for processing the received enabling code (C_{id}) ; comparing means (10) for comparing the processed enabling code (C_{id}) with said identification code (Cᵥₑₕ); and actuating means (11) which respond to said comparing means (10) to enable use of said vehicle (3), in particular unlocking of the doors and start-up of the engine, and to adjust at least some of said adjustable devices (15, 16), if said processed enabling code (C_{id}) matches said identification code (Cᵥₑₕ).

10. A system as claimed in Claim 9, wherein said processing means comprises encryption means (12) for encryption of said enabling code (C_{id}) ; and said computing means comprise decryption means (9) for decryption of the received enabling code (C_{id}).

11. A system as claimed in Claim 10 wherein said encryption means (12) operate based on a public/private cryptographic key pair.

12. A system as claimed in Claim 9, wherein said data receiving means and said data transmission means comprise radio-frequency means (6, 8).

13. A system as claimed in any one of the foregoing Claims, wherein said processing means (12) are implemented in a Personal Digital Assistant (PDA), belonging to a owner of said key (2).

14. A system as claimed in any one of the foregoing Claims, wherein said key (2) is a USB key.

15. A system as claimed in any one of the foregoing Claims, further comprising a storage device (4) located inside said vehicle (3) and configured to store in said key (2) said personal data (Dₚₑᵣₛ) when said vehicle is used.

16. A key (2) for a vehicle utilization system (3) as claimed in any one of the foregoing Claims.

## Patentansprüche

1. Fahrzeugnutzungssystem, das die Nutzung eines Fahrzeugs (3) gestattet, das einen entsprechenden Identifizierungscode (Cᵥₑₕ) hat, wobei das System folgendes aufweist:
- einen Schlüssel (2), der eine Speichereinrichtung (5) hat, die so ausgebildet ist, daß sie einen Freigabecode (C_{id}) speichert, der die Nutzung des Fahrzeugs freigibt;
- eine Freigabeeinrichtung (4), welche die Nutzung des Fahrzeugs durch einen Benutzer gestattet, in dessen Besitz sich der Schlüssel (2) befindet, wenn der in dem Schlüssel gespeicherte Freigabecode (C_{id}) vorgegebene Bedingungen erfüllt; und
- eine Programmiereinrichtung (12) zum Erzeugen des Freigabecodes (C_{id}) als Funktion des Identifizierungscodes (Cᵥₑₕ) des Fahrzeugs und zum Speichern des Freigabecodes in dem Schlüssel (2);
**dadurch gekennzeichnet,**
**daß** die Speichereinrichtung (5) so ausgebildet ist, daß sie zusätzlich zu dem Freigabecode mindestens einen weiteren Freigabecode speichert;
und **daß** der weitere Freigabecode einem anderen Fahrzeug (3) zugeordnet ist, das von dem Benutzer mit Hilfe des Schlüssels (2) benutzbar ist und das von der Programmiereinrichtung als Funktion eines entsprechenden Identifizierungscodes des anderen Fahrzeugs erzeugt ist und mit dem Freigabecode in der Speichereinrichtung koexistiert.

2. System nach Anspruch 1,
wobei der Schlüssel (2) ein persönlicher Schlüssel des Benutzers ist.

3. System nach einem der vorhergehenden Ansprüche,
wobei der Schlüssel (2) ein Universalschlüssel ist.

4. System nach einem der vorhergehenden Ansprüche,
wobei die Freigabeeinrichtung (4) Leseeinrichtungen (8, 9) zum Lesen des in dem persönlichen Universalschlüssel (2) gespeicherten Freigabecodes aufweist.

5. System nach einem der vorhergehenden Ansprüche,
wobei die Verarbeitungseinrichtung (12) eine Anzahl von verschiedenen Freigabecodes (C_{id}) als Funktion des gleichen Identifizierungscodes (Cᵥₑₕ) erzeugt.

6. System nach einem der vorhergehenden Ansprüche,
wobei die Fahrzeuge (3) entsprechende einstellbare Einrichtungen (15, 16) haben und wobei die Speichereinrichtung (5) persönliche Daten (Dₚₑᵣₛ) bezüglich persönlicher Benutzerinformationen und persönlicher Benutzereinstellungen der einstellbaren Einrichtungen jedes Fahrzeugs speichert;
wobei die persönlichen Daten (Dₚₑᵣₛ) einem entsprechenden Freigabecode zugeordnet sind und von der Freigabeeinrichtung (4) gelesen werden, um die Einstellung der einstellbaren Einrichtungen (15, 16) zu aktivieren.

7. System nach Anspruch 6,
wobei die einstellbaren Einrichtungen (15, 16) mindestens eine von den folgenden Einrichtungen aufweist:
- einen automatischen Fahrersitz;
- eine Klimaanlage;
- einen automatischen Rückspiegel;
- ein Autoradio;
- ein Satellitennavigationssystem;
- ein zelluläres Kommunikationssystem.

8. System nach einem der vorhergehenden Ansprüche,
wobei die Verarbeitungseinrichtung eine Einstelleinrichtung (12) zum Einstellen einer Autorisierungsstufe zur Benutzung des Fahrzeugs (3) hat;
wobei die Einstelleinrichtung jedem von den Freigabecodes (C_{id}) zusätzliche Daten bezüglich der eingestellten Autorisierungsstufe zuordnet;
und wobei die Freigabeeinrichtung (4) die Benutzung des Fahrzeugs durch den Benutzer in Abhängigkeit von den zusätzlichen Daten gestattet.

9. System nach einem der vorhergehenden Ansprüche,
wobei der persönliche Universalschlüssel (2) eine Datenübertragungseinrichtung (6) zum Übertragen von mindestens dem Freigabecode (C_{id}) hat; und
wobei die Freigabeeinrichtung (4) folgendes aufweist:
- eine Datenempfangseinrichtung (8) zum Empfangen der von der Datenübertragungseinrichtung (6) übertragenen Daten;
- eine Recheneinrichtung (9) zum Verarbeiten des empfangenen Freigabecodes (C_{id}); eine Vergleichseinrichtung (10) zum Vergleichen des verarbeiteten Freigabecodes (C_{id}) mit dem Identifizierungscode (Cᵥₑₕ); und
- eine Aktivierungseinrichtung (11), die auf die Vergleichseinrichtung (10) anspricht, um die Nutzung des Fahrzeugs (3) freizugeben, insbesondere die Türen zu entriegeln und den Motor zu starten, und um mindestens einige von den einstellbaren Einrichtungen (15, 16) einzustellen, wenn der verarbeitete Freigabecode (C_{id}) mit dem Identifizierungscode (Cᵥₑₕ) übereinstimmt.

10. System nach Anspruch 9,
wobei die Verarbeitungseinrichtung eine Verschlüsselungseinrichtung (12) zum Verschlüsseln des Freigabecodes (C_{id}) aufweist; und
wobei die Recheneinrichtung eine Entschlüsselungseinrichtung (9) zum Entschlüsseln des empfangenen Freigabecodes (C_{id}) aufweist.

11. System nach Anspruch 10,
wobei die Verschlüsselungseinrichtung (12) auf der Basis eines öffentlichen/privaten kryptographischen Schlüsselpaars arbeitet.

12. System nach Anspruch 9,
wobei die Datenempfangseinrichtung und die Datenübertragungseinrichtung HF-Einrichtungen (6, 8) aufweisen.

13. System nach einem der vorhergehenden Ansprüche,
wobei die Verarbeitungseinrichtung (12) in einem persönlichen digitalen Assistenten (PDA) implementiert ist, der einem Eigentümer des Schlüssels (2) gehört.

14. System nach einem der vorhergehenden Ansprüche,
wobei der Schlüssel (2) ein USB-Schlüssel ist.

15. System nach einem der vorhergehenden Ansprüche,
das ferner eine Speichervorrichtung (4) aufweist, die im Inneren des Fahrzeugs (3) angeordnet und dazu ausgebildet ist, in dem Schlüssel (2) die persönlichen Daten (Dₚₑᵣₛ) zu speichern, wenn das Fahrzeug benutzt wird.

16. Schlüssel (2) für ein Fahrzeugnutzungssystem (3)
nach einem der vorhergehenden Ansprüche.

## Revendications

1. Système d'utilisation de véhicule permettant l'utilisation d'un véhicule (3) ayant un code d'identification respectif (Cᵥₑₕ), le système comprenant :
- une clé (2) ayant des moyens de mémoire (5) configurés pour mémoriser un code d'activation (C_{id}) permettant l'utilisation dudit véhicule ;
- des moyens d'activation (4) permettant l'utilisation dudit véhicule par un utilisateur en possession de ladite clé (2), si le code d'activation (C_{id}) mémorisé dans la clé remplit des conditions données ; et
- des moyens de programmation (12) pour générer ledit code d'activation (C_{id}) en tant que fonction dudit code d'identification (Cᵥₑₕ) du véhicule, et pour mémoriser ledit code d'activation dans ladite clé (2) ; **caractérisé en ce que** lesdits moyens de mémoire (5) sont configurés pour mémoriser au moins un autre code d'activation (C_{id}) en plus dudit code d'activation ; ledit autre code d'activation étant associé à un véhicule différent (3) utilisable par ledit utilisateur au moyen de ladite clé (2) et généré par lesdits moyens de programmation en tant que fonction d'un code d'identification respectif dudit véhicule différent, et coexistant avec ledit code d'activation à l'intérieur desdits moyens de mémoire.

2. Système selon la revendication 1, dans lequel ladite clé (2) est une clé personnelle dudit utilisateur.

3. Système selon l'une quelconque des revendications précédentes, dans lequel ladite clé (2) est une clé universelle.

4. Système selon l'une quelconque des revendications précédentes, dans lequel lesdits moyens d'activation (4) comprennent des moyens de lecture (8, 9) pour lire le code d'activation (C_{id}) mémorisé dans ladite clé (2) personnelle universelle.

5. Système selon l'une quelconque des revendications précédentes, dans lequel lesdits moyens de traitement (12) génèrent un certain nombre de codes d'activation (C_{id}) différents en tant que fonction du même code d'identification (Cᵥₑₕ).

6. Système selon l'une quelconque des revendications précédentes, dans lequel lesdits véhicules (3) ont des dispositifs ajustables (15, 16) respectifs, et lesdits moyens de mémoire (5) mémorisent des données personnelles (Dₚₑᵣₛ) relatives aux informations personnelles de l'utilisateur et aux paramètres personnels de l'utilisateur desdits dispositifs ajustables de chaque véhicule ; lesdites données personnelles (Dₚₑᵣₛ) étant associées à un code d'activation A respectif étant lu par lesdits moyens d'activation (4) pour activer l'ajustement desdits dispositifs ajustables (15, 16).

7. Système selon la revendication 6, dans lequel lesdits dispositifs ajustables (15, 16) comprennent au moins l'un des éléments suivants :
- un siège automatique du conducteur ;
- un système de climatisation ;
- un rétroviseur intérieur automatique ;
- un autoradio ;
- un système de navigation par satellite ;
- un système de communication cellulaire ;

8. Système selon l'une quelconque des revendications précédentes, dans lequel lesdits moyens de traitement ont des moyens de paramètres (12) afin de paramétrer un niveau d'autorisation pour l'utilisation dudit véhicule (3) ; lesdits moyens de paramètres associant à chacun desdits codes d'activation (C_{id}) des données supplémentaires relatives au niveau d'autorisation paramétré ; et lesdits moyens d'activation (4) permettant l'utilisation dudit véhicule par ledit utilisateur selon lesdites données supplémentaires.

9. Système selon l'une quelconque des revendications précédentes, dans lequel ladite clé (2) personnelle universelle a des moyens de transmission de données (6) pour transmettre au moins ledit code d'activation (C_{id}) ; et lesdits moyens d'activation (4) comprennent : des moyens de réception de données (8) pour recevoir les données transmises par lesdits moyens de transmission de données (6) ; des moyens informatiques (9) pour traiter le code d'activation (C_{id}) reçu ; des moyens de comparaison (10) pour comparer le code d'activation (C_{id}) traité avec ledit code d'identification (Cᵥₑₕ) ; et des moyens de commande (11) qui répondent auxdits moyens de comparaison (10) pour activer l'utilisation dudit véhicule (3), en particulier le déverrouillage des portes et le démarrage du moteur, et pour ajuster au moins certains desdits dispositifs ajustables (15, 16), si ledit code d'activation (C_{id}) traité correspond audit code d'identification (Cᵥₑₕ).

10. Système selon la revendication 9, dans lequel lesdits moyens de traitement comprennent des moyens de cryptage (12) pour le cryptage dudit code d'activation (C_{id}) ; et lesdits moyens informatiques comprennent des moyens de décryptage (9) pour le décryptage du code d'activation (C_{id}) reçu.

11. Système selon la revendication 10, dans lequel lesdits moyens de cryptage (12) fonctionnent sur la base d'une biclé cryptographique privé/public.

12. Système selon la revendication 9, dans lequel lesdits moyens de réception de données et lesdits moyens de transmission de données comprennent des moyens de radiofréquences (6, 8).

13. Système selon l'une quelconque des revendications précédentes, dans lequel lesdits moyens de traitement (12) sont implantés dans un assistant numérique personnel (PDA), appartenant au propriétaire de ladite clé (2).

14. Système selon l'une quelconque des revendications précédentes, dans lequel ladite clé (2) est une clé USB.

15. Système selon l'une quelconque des revendications précédentes, comprenant en outre un dispositif de stockage (4) situé à l'intérieur dudit véhicule (3) et configuré de façon à stocker dans ladite clé (2) lesdites données personnelles (Dₚₑᵣₛ) lorsque ledit véhicule est utilisé.

16. Clé (2) pour un système d'utilisation (3) d'un véhicule selon l'une quelconque des revendications précédentes.
